# EUROPÄISCHE PATENTSCHRIFT

(11) **EP 2 945 477 B1**
(45) Veröffentlichungstag und Bekanntmachung des Hinweises auf die Patenterteilung: **17.04.2024**
(21) Anmeldenummer: 14706487.7
(22) Anmeldetag: 20.01.2014
(51) Int. Cl.: B01D 25/127, B01D 39/08, C02F 3/30, A01K 63/04, D04B 21/16, D04B 21/10, B01D 35/10, C02F 3/06, C02F 103/00, C02F 1/50

(54) **FILTEREINHEIT**
FILTER UNIT
UNITÉ FILTRE

(30) Priorität: 18.01.2013 WO PCT/IB2013/050482
(43) Veröffentlichungstag der Anmeldung: 25.11.2015
(73) Patentinhaber: OASE GmbH, 48477 Hörstel (DE)
(72) Erfinder: WILLUWEIT, Thomas, 95030 Hof (DE); GRIESBACH, Ralf, 95030 Hof (DE)
(74) Vertreter: Isarpatent
(86) Internationale Anmeldenummer: PCT/EP2014/050998
(87) Internationale Veröffentlichungsnummer: WO 2014/111558

(56) Entgegenhaltungen:
- DE-A1- 4 428 238
- DE-U1-202012 000 426
- US-A- 3 012 923
- US-A- 3 209 916
- US-A- 4 639 318
- US-A1- 2008 087 600
- US-B2- 6 787 492

## Beschreibung

Die vorliegende Neuerung betrifft eine Filtereinheit, insbesondere für ein Filtersystem für Wasser, das beispielsweise in Filtern für Teiche, Aquarien, Pools und Aquakulturanlagen verwendet wird.

Filtereinheiten, insbesondere für Teiche, weisen normalerweise mehrere Bereiche für die Filterung auf, um eine gute Filtereffizienz zu erzielen.

Ein Beispiel für eine Filtereinheit ist in der WO 2009/127436 angegeben, die, optional in einem Filtersystem, zum Reinigen von Fluiden verwendet wird und zum Abfiltrieren von Schlamm und Schwebealgen aus Wasser oder zur Reinigung von Gasen verwendet werden kann.

Des Weiteren ist aus der US 2008/087600 A1 ein Fadensystem zur Installation in einem Trinkwassersystem zur Verhinderung von Legionellen bekannt. Aus der DE 44 28 238 A1 ist ein mehrflächiges, vorzugsweise doppelflächiges Textilmaterial bekannt, welches zum Polstern und Verkleiden von Innenräumen, wie z. B. Autoinnenauskleidungen eingesetzt wird. Außerdem ist in der US 3 209 916 A ein rohrförmig aufgebauter Filter beschrieben, der einen hohlen Innenraum aufweist, der einen Durchgang bereitstellt. An den beiden Enden des rohrförmigen Filters sind Dichtungskappen vorgesehen. Die US 6 787 492 B2 offenbart des Weiteren ein Filtertuch, das als Filter vorgesehen ist, wobei das Filtertuch eine mittlere Schicht aufweist, die zwischen zwei Schutzschichten angeordnet ist. Die mittlere Schicht kann z.B. eine gewebte Struktur sein und die Schutzschichten können Schichten sein, die durch Nadeln an der mittleren Schicht befestigt sind. Weiter ist in der DE 20 2012 000426 U1 eine Filtereinheit beschrieben, die einen Filterkörper und ein Abstandsgewirk aufweist.

Jedoch besteht auch bei einer solchen Filtereinheit nach wie vor Bedarf, die Filterwirkung zu verbessern. Zudem besteht Bedarf an einer Filtereinheit, die zur Besiedlung mit Mikroorganismen geeignet ist und beispielsweise mit Chemikalien bzw. Hilfsmitteln beschichtet werden kann. Weiterhin besteht Bedarf an einer Filtereinheit, oder einem Abstandsgewirk in einer Filtereinheit, mit dem eine Nitrifikation erzielt werden kann.

Eine Lösung dieser Probleme wird durch die Ausgestaltung gemäß Anspruch 1 erzielt.

Gemäß der Erfindung wird eine Filtereinheit bereitgestellt mit den Merkmalen des Anspruchs 1.

Die der vorliegenden Erfindung zugrundeliegende Erkenntnis oder Idee besteht darin, das Abstandsgewirk als Filterkörper zusätzlich zu rollen und zu komprimieren und ein zu filterndes Fluid zwischen den Deckschichten des Abstandsgewirks entlang zu leiten. Dadurch kann die Filterwirkung verbessert und durch den Komprimierungsgrad die Durchflussgeschwindigkeit konstant gehalten werden.

Vorteilhafte Ausgestaltungen und Weiterbildungen der Erfindung ergeben sich aus den Unteransprüchen sowie der Beschreibung unter Bezugnahme auf die Zeichnungen.

In der Erfindung ist das wenigstens eine Abstandsgewirk in wenigstens einem Abschnitt in Querrichtung zu seinen Deckschichten komprimiert. Ein zu filterndes Fluid kann dabei zwischen den Deckschichten des wenigstens einen Abstandsgewirks entlang strömen und durch das Abstandsgewirk gefiltert werden.

In der Erfindung weist die Filtereinheit das wenigstens eine Abstandsgewirk als Filter-körper auf. Die Filtereinheit weist dabei eine Aufnahme zum Aufnehmen des Abstandsgewirks als Filterkörper auf. Die Aufnahme ist derart ausgebildet sein, dass das in der Aufnahme aufgenommene wenigstens eine Abstandsgewirk in wenigstens einem Abschnitt oder in mehreren Abschnitten in Querrichtung zu seinen Deckschichten komprimierbar ist. Bei mehreren Abschnitten in welchen das wenigstens eine Abstandsgewirk komprimierbar ist, kann beispielsweise eine stufenweise Komprimierung und/oder Dekomprimierung stattfinden. In einem Filterbetrieb der Filtereinheit fließt die zu filternde Flüssigkeit und/oder gefilterte Flüssigkeit zwischen der ersten und zweiten Deckschicht des Abstandsgewirks durch das Abstandsgewirk hindurch und wird dabei gefiltert.

Gemäß einer Ausführungsform der Erfindung ist die Aufnahme mit einem Einlasstrichterabschnitt versehen. Der Einlasstrichterabschnitt kann dabei derart ausgebildet sein, dass er sich verjüngt und hierdurch das wenigstens eine Abstandsgewirk quer zu seinen Deckschichten komprimiert. Der Einlasstrichterabschnitt hat den Vorteil, dass er einfach herzustellen ist und eine besonders einfache Komprimierung des Abstandsgewirks erlaubt, ohne zusätzliche bewegliche Elemente.

In einer Ausführungsform der Erfindung ist die Aufnahme mit einem Auslasstrichterabschnitt versehen. Der Auslasstrichterabschnitt kann dabei derart ausgebildet sein, dass er sich vergrößert und hierdurch dem wenigstens einen Abstandsgewirk erlaubt sich auseinanderzufalten. Ebenso kann der Auslasstrichterabschnitt auch derart ausgebildet sein, dass er sich verjüngt und hierdurch das wenigstens eine Abstandsgewirk quer zu seinen Deckschichten komprimiert.

In einer anderen Ausführungsform der Erfindung weist die Aufnahme wenigstens ein bewegliches Schieberelement auf. Das Schieberelement kann dabei derart in der Aufnahme vorgesehen sein, dass es zwischen einer Position, in welcher es das wenigstens eine Abstandsgewirk quer zu den Deckschichten komprimiert und einer Position beweglich ist, in welcher das Abstandsgewirk sich wieder auseinanderfaltet oder de-komprimiert wird. Das Schieberelement kann dabei in Querrichtung zu den Deckschichten des Abstandsgewirks verfahrbar oder beweglich sein. Zusätzlich oder alternativ kann das Schieberelement auch schrägstellbar ausgebildet sein, um mit der Aufnahme einen Trichter zu bilden, wobei der Trichter sich in Längsrichtung des wenigstens einen dazwischen angeordneten Abstandsgewirks vergrößern oder verjüngen kann.

In einer weiteren Ausführungsform der Erfindung ist der Filterkörper als Band mit zwei Enden oder als Endlosband ausgebildet. Die Aufnahme kann dabei derart ausgebildet sein, dass das Band in die Aufnahme an einem Ende einführbar, durch die Aufnahme hindurchführbar oder hindurchbeweglich und an dem anderen Ende aus der Aufnahme wieder herausführbar ist. Dabei kann das Band zum Einführen in die Aufnahme beispielsweise von einer Rolle abwickelbar und in die Aufnahme einführbar und/oder das Band nach dem Herausführen aus der Aufnahme auf eine Rolle aufwickelbar vorgesehen sein.

Gemäß einer anderen Ausführungsform der Erfindung weist die Filtereinheit eine Filter-Reinigungseinheit auf oder ist mit einer Filter-Reinigungseinheit koppelbar zum Reinigen des Abstandsgewirks vor und/oder nach dem Durchströmen des Abstandsgewirks in der Aufnahme mit einem zu filternden Fluid. Die Filter-Reinigungseinheit hat den Vorteil, dass durch das Reinigen der Filtereinheit diese mehrfach und/oder länger eingesetzt werden kann und dadurch Betriebskosten gesenkt werden können.

In der Erfindung weist die Aufnahme wenigstens einen Fluideinlass auf zum Leiten von zu filterndem Fluid zu dem wenigstens einen Abstandsgewirk und zum Durchströmen des wenigstens einen Abstandsgewirks in Längsrichtung entlang seiner Deckschichten und den sich dazwischen erstreckenden Fäden. Die Aufnahme weist einen Fluidauslass auf zum anschließenden Abführen des durch das wenigstens eine Abstandsgewirk gefilterten Fluids. Der Fluideinlass kann dabei mit einem Leitungssystem oder einem Behälter usw. für ein zu filterndes Fluid verbunden werden. Entsprechend kann auch der Fluidauslass mit einem Leitungssystem oder einem Behälter usw. für gefiltertes Fluid verbunden werden.

In einer Ausführungsform der Erfindung sind in der Filtereinheit mehrere Abstandsgewirke vorgesehen. Die Abstandsgewirke können beispielsweise kassettenartig nebeneinander angeordnet werden. Die Abstandsgewirke sind gerollt und außerdem bei Bedarf zusätzlich auch noch verdrillt werden.

Gemäß einer Ausführungsform der Erfindung ist der Filterkörper aus Metall, einer Metalllegierung und/oder Kunststoff, z.B. Polyurethan (PU). Der Kunststoff kann wahlweise zusätzlich mit einem Metall oder einer Metalllegierung beschichtet sein.

In einer Ausführungsform der Erfindung sind wenigstens eine der Deckschichten und/oder die Fäden des Abstandsgewirks mit desinfizierend und/oder antimikrobiell wirkenden Mitteln versehen. Beispielsweise kann wenigstens eine der Deckschichten und/oder die Fäden des Abstandsgewirks mit einem Biofilm versehen sein, welcher Bakterien zum Reinigen des zu filternden Wassers vor Räubern schützt, welche die Bakterien ansonsten fressen. Künstliche Biofilme lassen sich z.B. aus Alginaten herstellen. Dabei werden Mikroorganismen mit Alginatlösungen gemischt. Mit dieser Lösung kann das Abstands-gewirke benetzt werden und mit Hilfe von z.B. Calciumsalzen aushärten bzw. polymerisieren, so dass sich ein künstlicher Biofilm auf jedem Gewebefaden bildet. Die Erfindung ist jedoch nicht auf dieses Beispiel für einen Biofilm beschränkt. Es kann jeder andere Biofilm vorgesehen werden, der geeignet ist, insbesondere Bakterien zum Reinigen des zu filternden Wassers vor Räubern zu schützen.

Die vorliegende Erfindung wird nachfolgend anhand der in der schematischen Figur der Zeichnung angegebenen Ausführungsbeispiele näher erläutert. Es zeigt dabei:
Fig. 1 eine Prinzipskizze eine Filtereinheit, welche Merkmale der Erfindung zeigt, aber keine Ausführungsform der Erfindung wie beansprucht,
Fig. 2 ein Abstandsgewirk;
Fig. 3 eine Prinzipskizze einer Filtereinheit, welche Merkmale der Erfindung zeigt, aber keine Ausführungsform der Erfindung wie beansprucht;
Fig. 4 eine Prinzipskizze einer Filtereinheit, welche Merkmale der Erfindung zeigt, aber keine Ausführungsform der Erfindung wie beansprucht;
Fig. 5 eine Prinzipskizze einer Filtereinheit mit einem Abstandsgewirk, welche Merkmale der Erfindung zeigt, aber keine Ausführungsform der Erfindung wie beansprucht;
Fig. 6 eine Perspektivansicht des Abstandsgewirks in der Filtereinheit gemäß Fig. 5;
Fig. 7 eine Prinzipskizze einer Filtereinheit, welche Merkmale der Erfindung zeigt, aber keine Ausführungsform der Erfindung wie beansprucht;
Fig. 8 eine Prinzipskizze eines Filterkörpers in Form mehrerer Abstandsgewirke, welche Merkmale der Erfindung zeigt, aber keine Ausführungsform der Erfindung wie beansprucht;
Fig. 9 eine Prinzipskizze einer Filtereinheit mit einem Abstandsgewirk, welche Merkmale der Erfindung zeigt, aber keine Ausführungsform der Erfindung wie beansprucht;
Fig. 10 eine Perspektivansicht eines Abstandsgewirks einer Ausführungsform der Erfindung, wobei das Abstandsgewirk zusätzlich gerollt ist; und
Fig. 11 eine Perspektivansicht eines Abstandsgewirks, wobei das Abstandsgewirk gerollt und zusätzlich verdrillt ist.

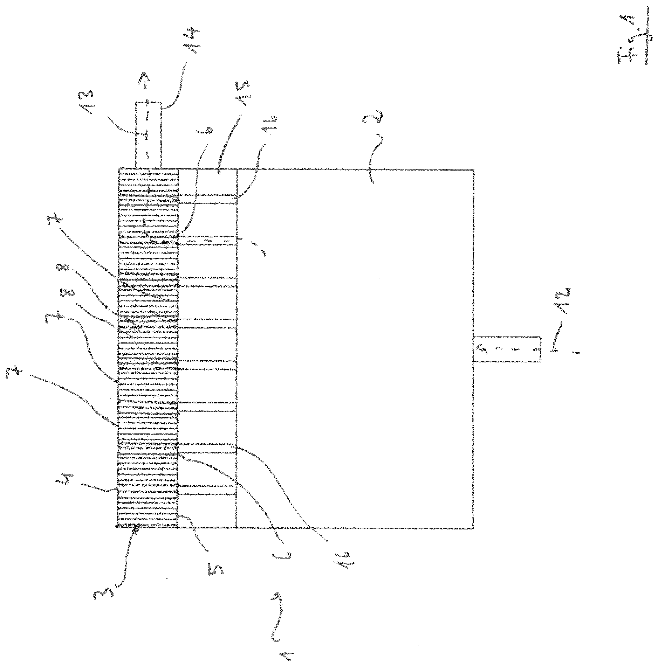

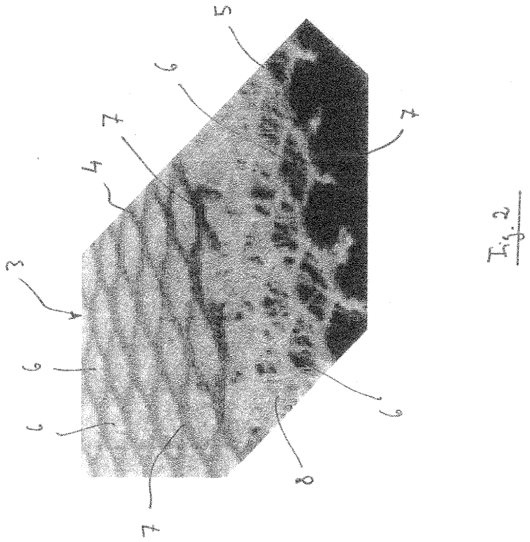

Die vorliegende Filtereinheit (1) weist zumindest einen Filterkörper (2) und ein Abstandsgewirk (3), ein in der Textilindustrie übliches Material, auf, wie in Fig. 1 prinzipiell dargestellt ist. Das Abstandsgewirk umfasst hierbei eine erste und eine zweite Deckschicht (4; 5) mit einer Vielzahl von Öffnungen (6), die von Randbereichen (7) begrenzt werden, wobei sich Fäden von den Randbereichen (7) der ersten Deckschicht (4) zu Randbereichen (7) der zweiten Deckschicht (5) erstrecken. Ein Beispiel für ein solches Abstandsgewirk ist in Fig. 2 zu sehen.

Die zu filtrierende Flüssigkeit wird der Filtereinheit (1) als zu filternde Flüssigkeit (12) zugeführt und wird als gefilterte Flüssigkeit (13) abgeleitet, nachdem sie mittels des Filterkörpers (2) gefiltert wurde.

In der Ausgestaltung gemäß Figur 1 fließt die zu filternde Flüssigkeit (12) und/oder mittels des Filterkörpers gefilterte Flüssigkeit (13) im Wesentlichen senkrecht in das Abstandsgewirk (3) hinein und zwischen der ersten und zweiten Deckschicht (4; 5) durch das Abstandsgewirk hindurch. Hierdurch wird eine zusätzliche Filterwirkung erzielt, da die zu filternde Flüssigkeit das Filtermaterial in eine Richtung gut durchdringen kann, in der anderen Richtung jedoch schlecht. Dies bietet eine verbesserte Filterwirkung im Vergleich zu gängigen Filtermaterialien, wie beispielsweise sogenannten Japanmatten. Weiterhin ist das Material des Abstandsgewirks zur Besiedlung mit Mikroorganismen geeignet und kann beispielsweise mit Chemikalien bzw. Hilfsmitteln beschichtet sein. Hierdurch kann auch eine Nitrifikation der Flüssigkeit erreicht werden.

Vorteilhafterweise fließt die gefilterte Flüssigkeit (13) im Wesentlichen geradlinig aus dem Filterkörper (1) heraus in das Abstandsgewirk (3) hinein und hiernach quer durch das Abstandsgewirk (3) hindurch zu einem Auslass der Filtereinrichtung (1). Durch die zum Austritt der Fluide hin entstehende Querströmung wird hierbei eine zusätzliche Filterwirkung erzielt.

In einer vorteilhaften Ausgestaltung, wie beispielsweise in Fig. 1. Dargestellt, ist zwischen dem Abstandsgewirk (3) und dem Filterkörper (2) eine Abdeckplatte (15) mit Öffnungen (16) angeordnet, durch die die gefilterte Flüssigkeit (13) aus dem Filterkörper (2) durch die Öffnungen (16) in der Abdeckplatte (15) hindurch im Wesentlichen senkrecht in das Abstandsgewirk (3) hineinfließt. Hierdurch wird der Effekt der Querströmung, die nun senkrecht zur Austrittsöffnung aus dem Filterkörper (2) steht, weiter verbessert.

Bevorzugt verhindert die Abdeckplatte (15) ein Vermischen der gefilterten und der zu filtrierenden Flüssigkeit (13; 12), um eine nachträgliche Verunreinigung der gefilterten Flüssigkeit (13) durch Mischen mit der zu filtrierenden Flüssigkeit (12) zu verhindern und somit eine mögliche Verunreinigung des Abstandsgewirks (3) zu verhindern bzw. zu vermindern.

In einer speziellen Ausgestaltung ist das Abstandsgewirk (3), insbesondere dessen Fäden (8), mit desinfizierend oder antimikrobiell wirkenden Mitteln versehen, die die Reinigung der zu filternden Flüssigkeit (12) weiter verbessern.

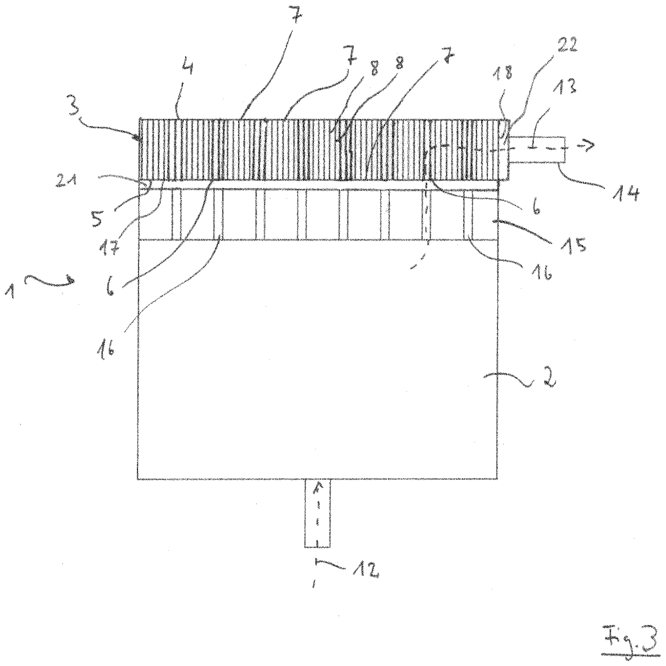

Eine weitere Verbesserung der Filterwirkung wird erzielt, wenn auf wenigstens einer Deckfläche (17) und oder Seitenfläche (18) des Abstandsgewirks (3) eine Papierschicht (21; 22) aufgebracht ist, wie beispielsweise in Fig. 3 dargestellt.

Weiterhin kann die Filtereinheit (1) eine Einrichtung (23) zum Erzeugen von Gasblasen (24), welche unterhalb des Abstandsgewirks (3) angeordnet ist, umfassen, sodass die Gasblasen (24) mit den Fäden (8) des Abstandsgewirks (3) in Wechselwirkung treten, um dadurch Ablagerungen (25) von den Fäden (8) zu lösen. Hierdurch wird eine Verunreinigung des Abstandsgewirks (3) weitergehend vermieden bzw. verhindert.

Das Abstandsgewirk (3) kann zusammen mit dem Filterkörper (2), gemäß der Neuerung jeweils vorteilhaft verwendet werden, insbesondere zum Filtrieren von Flüssigkeiten. Insbesondere kann die Filtereinheit der Neuerung oder ein Abstandsgewirk, wie es für die Neuerung definiert ist, zur Nitrifikation verwendet werden.

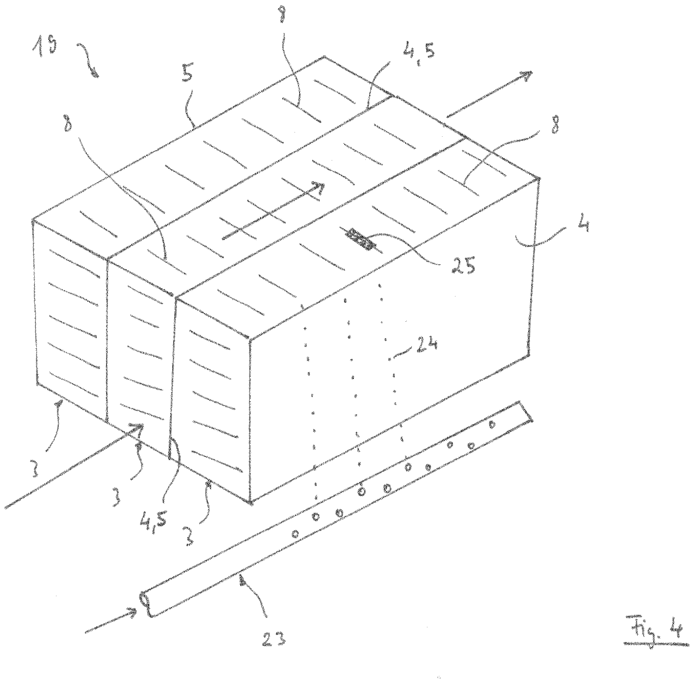

Eine weitere vorteilhafte Ausgestaltung umfasst eine Filtereinheit (19), die ein Abstandsgewirk (3), welches eine erste und eine zweite Deckschicht (4; 5) mit jeweils einer Vielzahl von Öffnungen (6) umfasst, die von Randbereichen (7) begrenzt werden, aufweist, wobei sich Fäden (8) von den Randbereichen (7) der ersten Deckschicht (4) zu Randbereichen (7) der zweiten Deckschicht (5) erstrecken, und eine Einrichtung (23) zum Erzeugen von Gasblasen (24), welche unterhalb des Abstandsgewirks (3) angeordnet ist, sodass die Gasblasen (24) mit den Fäden (8) des Abstandsgewirks (3) in Wechselwirkung treten, um dadurch Ablagerungen (25) von den Fäden (8) zu lösen. Hierdurch wird eine Verunreinigung des Abstandsgewirks (3) weitergehend vermieden bzw. verhindert. Eine solche Einrichtung (24) zum Erzeugen von Gasblasen (23) ist beispielsweise in Fig. 4 gezeigt.

Bevorzugt ist diese Filtereinheit (19) so ausgestaltet, dass in einem Filterbetrieb der Filtereinheit (19) die zu filternde Flüssigkeit (12) und/oder gefilterte Flüssigkeit (13) im Wesentlichen zwischen der ersten und zweiten Deckschicht (4; 5) durch das Abstandsgewirk (3) hindurchfließt.

Insbesondere können in der Filtereinheit (19) mehrere der Abstandsgewirke (3) in der Filtereinheit (19) kassettenartig nebeneinander angeordnet sein, wie dies in Fig. 4 dargestellt ist, wodurch eine weitere Verbesserung der Filterwirkung erzielt wird.

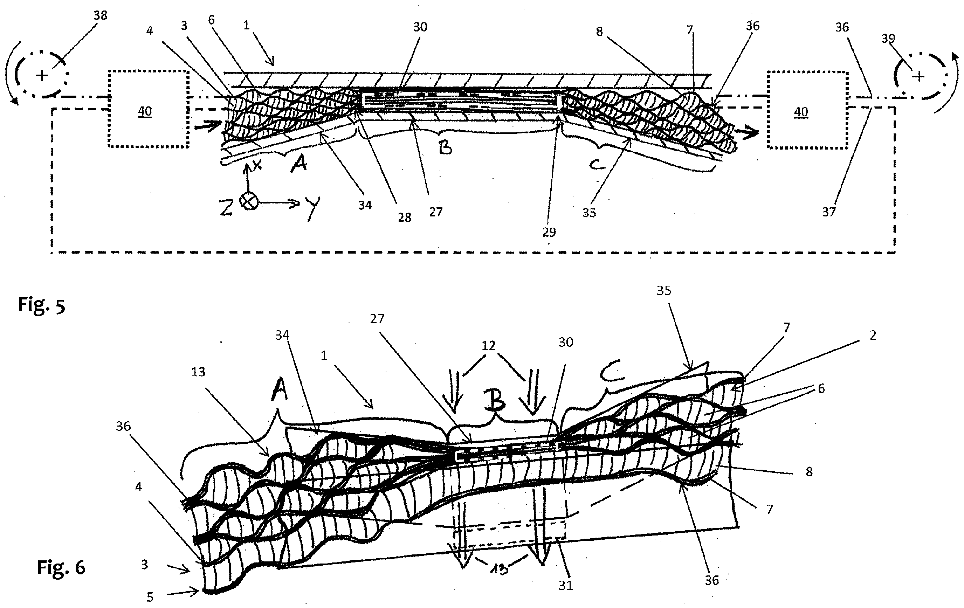

In Fig. 5 ist eine Prinzipskizze einer Filtereinheit (1) mit einem Filterkörper (2) in Form eines Abstandsgewirks (3) gemäß einer weiteren Ausführungsform gezeigt. Fig. 6 zeigt eine Perspektivansicht des Filterkörpers (2) bzw. des Abstandsgewirks (3) in der Filtereinheit (1) gemäß Fig. 5.

Der Filterkörper (2) als Abstandsgewirk (3) weist eine erste und eine zweite Deckschicht (4, 5) auf, mit einer Vielzahl von Öffnung (6) auf, wobei der Filterkörper (2) quer zu dem Abstandsgewirk (3) und der ersten und zweiten Deckschicht (4, 5) komprimierbar ist, wie in Fig. 5 und 6 gezeigt ist.

Des Weiteren weist die Filtereinheit (1) eine Aufnahme (27) auf, zum Aufnehmen und Komprimieren des komprimierbaren Filterkörpers (2) und Filtern eines zu filternden Fluids mittels des komprimierten Filterkörpers (2). Die Aufnahme (27) ist dabei derart ausgebildet, dass der in der Aufnahme (27) aufgenommene komprimierbare Filterkörper (2) bzw. das Abstandsgewirk (3) in seiner Querrichtung oder X-Richtung in Fig. 5 komprimiert wird, und senkrecht zu seiner Deckschicht (4) bzw. (5) oder, wie in Fig. 5 gezeigt ist, in Z-Richtung von einem zu filternden Fluid (12) durchströmt werden kann, wobei das zu filternde Fluid (12) dabei gefiltert wird und als gefiltertes Fluid (13) auf der anderen Seite des Abstandsgewirks (3) aus der Filtereinheit (1) entnommen oder abgeleitet werden kann. Ein komprimierender Abschnitt B der Aufnahme (27) in welchem der Filterkörper (2) in Form des Abstandsgewirks (3) in der Filtereinheit (1) komprimiert wird ist in den Fig. 5 und 6 gezeigt.

Wie in Fig. 5 gezeigt ist, weist die Aufnahme (27) eine Einlassöffnung (28) und eine Auslassöffnung (29) auf zum Einführen und Hindurchführen des Filterkörpers (2) in Form des Abstandsgewirks (3) durch die Aufnahme (27). Des Weiteren weist die Aufnahme (27), wie in Fig. 5 und 6 mit einer strichpunktierten Linie angedeutet ist, einen zusätzliche Fluideinlass (30) und einen Fluidauslass (31) auf zum Zuführen des zu filternden Fluids (12) von einer Seite des Abstandsgewirks (3) und zum Ableiten oder Entfernen des gefilterten Fluids (13) auf der anderen Seite des Abstandsgewirks (3).

Der Fluideinlass (30) kann dabei beispielsweise optional mit einem Anschluss versehen oder verbindbar ausgebildet sein, zum Anschließen beispielsweise einer Einrichtung mit einem zu filternden Fluid, wie einem Behälter mit einem zu filterndem Fluid, einem Leitungssystem mit einem zu filternden Fluid usw.. Entsprechend kann der Fluidauslass (31) optional beispielsweise mit einem Anschluss versehen oder verbindbar ausgebildet sein zum Anschließen beispielsweise einer Einrichtung zur Aufnahme oder zum Einleiten eines gefilterten Fluids, wie einem Behälter, einem Leitungssystem usw..

Wie in Fig. 5 gezeigt ist, ist die die Einlassöffnung (28) der Aufnahme (27) beispielsweise zusätzlich mit einem Einlasstrichterabschnitt (34) oder einem sich in seinem Querschnitt verjüngenden Abschnitt versehen, welcher derart ausgebildet ist, dass der Filterkörper (2) bzw. das Abstandsgewirk (3) quer oder senkrecht zu der ersten und zweiten Deckschicht (4, 5) oder in X-Richtung in Fig. 5 komprimiert wird. Der Bereich A des Einlasstrichterabschnitts der Filtereinheit (1) ist in den Fig. 5 und 6 gezeigt. Die Aufnahme (27) kann hierbei in Bereich B derart ausgebildet sein, dass sie den Filterkörper (2) beispielsweise aufnimmt ohne diesen weiter zu komprimieren sondern diesen nur in seinem komprimierten Zustand beibehält, da der Einlass-trichterabschnitt (34) (Bereich A) den Filterkörper (2) ausreichend komprimiert hat zum Filtern des zu filternden Fluids (12). Ebenso können der Einlasstrichterabschnitt (34) und die Aufnahme (27) derart ausgebildet sein, dass der Einlasstrichterabschnitt (24) den Filterkörper (2) in einem ersten Schritt komprimiert oder vorkomprimiert und die Aufnahme (27) (Bereich B) den Filterkörper (2) weiter komprimiert auf ein ausreichendes Maß, um ein zu filterndes Fluid geeignet zu filtern.

Zusätzlich kann auch die Auslassöffnung (29) der Aufnahme (27) mit einem Auslasstrichterabschnitt (35) versehen werden, welcher sich in seinem Querschnitt derart vergrößert, dass der Filterkörper (2) sich langsam auseinanderfaltet oder dekomprimiert. Der Bereich C des Auslasstrichterabschnitts (35) der Filtereinheit (1) ist ebenfalls in den Fig. 5 und 6 gezeigt.

Der Filterkörper (2) kann, wie in Fig. 5 mit einer doppeltgepunkteten Linie angedeutet, als Band (36) mit einem ersten und zweiten Ende ausgebildet werden, das beispielsweise von einer ersten Rolle (38) abgewickelt und in die Einlassöffnung (28) eingeführt und durch die Aufnahme (27) der Filtereinheit (1) hindurchgeführt wird, um nach Verlassen der Auslassöffnung (29) der Filtereinheit (1) beispielsweise auf eine zweite Rolle (39) aufgewickelt zu werden.

Ebenso kann das Band (36) auch als Endlosband (37) ausgebildet sein, wie mit einer gestrichelten Linie in Fig. 5 angedeutet ist.

Wurde ein Abschnitt des Bandes (36) oder Endlosbandes (37) mit dem zu filternden Fluid (12) durchströmt, so kann das Band (36) mittels der Rollen (38), (39) oder das Endlosband (37) mittels einer geeigneten Vorrichtung weiterbewegt werden, so dass als nächstes in der Aufnahme (27) ein neuer Abschnitt des Filterkörpers (2) zum Filtern angeordnet und durch den Fluideinlass (30) ein zu filterndes Fluid (13) durch den frischen Abschnitt des Filterkörpers (2) hindurchgeleitet und gefiltert werden kann.

Wahlweise zusätzlich kann die Filtereinheit (1) eine Filter-Reinigungseinheit (40) aufweisen oder mit einer Filter-Reinigungseinheit (40) gekoppelt werden, wie mit einer gepunkteten Linie in Fig. 5 angedeutet ist, zum Reinigen des Filterkörpers (2) vor und/oder nach dem Durchströmen des Filterkörpers (2) in der Aufnahme (27) mit einem zu filternden Fluid (12).

Als Filter-Reinigungseinheit (40) kann beispielsweise der Filterkörper (2) vor oder im Bereich des Einlasstrichterabschnitts (34) und/oder im Anschluss oder im Bereich des Auslasstrichterabschnitts (35) eine Spülvorrichtung aufweisen zum Durchspülen des Filterkörpers (2) mit Wasser, Wasserdampf und/oder einem anderen geeigneten flüssigen und/oder gasförmigen Reinigungsmedium.

Dies hat den Vorteil, dass beispielsweise das Endlosband (37) gereinigt und so immer mehrmals verwendet werden kann, bevor es ausgetauscht wird.

Gleiches gilt für das Band (36). Dieses kann nachdem ein Abschnitt zum Filtern verwendet und aus der Aufnahme (27) herausbewegt wurde zunächst durch eine nachgeschaltete Filter-Reinigungseinheit (40) gereinigt und anschließend zurück in die Aufnahme (27) bewegt werden, zum Filtern eines zu filternden Fluids (12). Im Anschluss kann der Abschnitt zum Filtern erneut durch die nachgeschaltete Filter-Reinigungseinheit (40) gereinigt und wieder zurück in die Aufnahme (27) bewegt werden zum Filtern eines weiteren zu filternden Fluids (12). Diese Schritte können sooft wiederholt werden, wie der Abschnitt des Filterkörpers (2) ausreichend gereinigt werden kann, um ein zu filterndes Fluid (12) geeignet zu filtern. Lässt sich der Abschnitt des Filterkörpers (2) nicht mehr ausreichend reinigen, so kann das Band (36) bzw. (37) weiterbewegt werden, so dass der nächste saubere Abschnitt des Filterkörpers (2) in der Aufnahme (27) bereit oder angeordnet ist, um ein zu filterndes Fluid (12) zu filtern. Für diesen neuen sauberen Abschnitt des Filterkörpers (2) können die zuvor genannten Schritte des Reinigens des Abschnitts des Filterkörpers (2), des erneuten Filterns durch den Abschnitt des Filterkörpers (2) wiederholt werden, bis auch dieser Abschnitt des Filterkörpers (2) verbraucht oder nicht mehr ausreichend gereinigt werden kann und das Band (36) bzw. (37) weiterbewegt werden muss zu dem nächsten sauberen Abschnitt.

Wie zuvor bereits mit Bezug auf die Fig. 1 bis 4 beschrieben wurde, weist der Filterkörper (2) ein Abstandsgewirk (3) mit einer oberen und einer unteren Deckschicht 4 bzw. 5 auf. Die Öffnungen (6) der Deckschichten (4, 5) des Filterkörpers (2) sind von Randbereichen (7) begrenzt, wobei sich Fäden (8) von den Radbereichen (7) der ersten Deckschicht (4) zu den Randbereichen (7) der zweiten Deckschicht (5) erstrecken und das Abstandgewirk (3) bilden.

Der Filterkörper (2) kann beispielsweise aus Metall, einer Metalllegierung und/oder Kunststoff, insbesondere Polyurethan (PU), bestehen, wobei der Kunststoff z.B. mit einem Metall oder einer Metalllegierung beschichtet ist. Des Weiteren kann der Filterkörper (2) außerdem optional zumindest teilweise oder vollständig mit einer geeigneten Beschichtung versehen sein, welche beispielsweise Keime, Viren, Bakterien und/oder Pilze usw. abtötet.

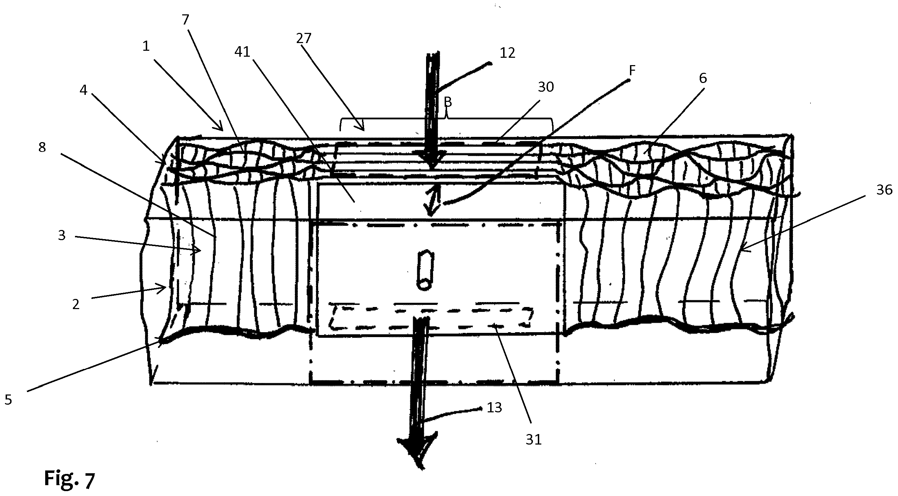

Fig. 7 zeigt des Weiteren eine Prinzipskizze einer Filtereinheit (1) gemäß einer weiteren Ausführungsform. In der Filtereinheit (1) wird dabei als Filterkörper (2) das zuvor beispielsweise mit Bezug auf die Fig. 5 und 6 beschriebene Abstandsgewirk (3) eingesetzt, so dass auf die Beschreibung hierzu auf die Fig. 5 und 6 verwiesen wird.

Die Filtereinheit (1) gemäß Fig. 7 unterscheidet sich dabei von der Filtereinheit gemäß der Fig. 5 und 6, dass ein Schieberelement (41) vorgesehen ist, welches in der Aufnahme (27) zwischen einer Position beweglich ist, zum Komprimieren und dekomprimieren des Filterkörpers (2). Das Schieberelement (41) kann dabei beispielweise derart in der Aufnahme (27) der Filtereinheit (1) zwischen einer Position verschoben werden, in welcher es den Filterkörper (2) ausreichend komprimiert zum Filtern eines zu filternden Fluids und einer Position, wie mit einer strichpunktierten Linie in Fig. 7 angedeutet ist, in welcher der Filterkörper (2) sich wieder zumindest teilweise oder vollständig auseinanderfaltet. Die Bewegung des Schieberelements (41) in der Aufnahme (27) ist mit einem Pfeil F in Fig. 7 angedeutet. Dadurch kann die Aufnahme (27) beispielsweise mit einem konstanten Querschnitt versehen sein. Dabei kann auf einen Einlasstrichterabschnitt und einen Auslasstrichterabschnitt wie sie in der Ausführungsform in den Fig. 5 und 6 gezeigt sind, verzichtet werden. Dies ist aber nicht zwingend.

Drückt das Schieberelement (41) den Filterkörper (2) zum Filtern eines zu filternden Fluids (12) ausreichend zusammen, so kann über einen entsprechenden Fluideinlass (30) der Aufnahme (27) das zu filternde Fluid (12) senkrecht oder quer zu der Deckschicht (4) des Abstandsgewirks (3) eingeleitet und durch das Abstandsgewirk (3) hindurch geleitet werden. Das fertig gefilterte Fluid verlässt dann, nachdem es das Abstandsgewirk (3) passiert hat, die Aufnahme (27) über einen Fluidauslass (31) auf der Unterseite der Aufnahme (27).

Wie zuvor mit Bezug auf die Fig. 5 und 6 beschrieben wurde, kann Fluideinlass (30) beispielsweise optional mit einem Anschluss versehen oder verbindbar ausgebildet sein, zum Anschließen beispielsweise einer Einrichtung mit einem zu filternden Fluid, wie einem Behälter mit einem zu filterndem Fluid, einem Leitungssystem mit einem zu filternden Fluid usw.. Entsprechend kann der Fluidauslass (31) optional beispielsweise mit einem Anschluss versehen oder verbindbar ausgebildet sein zum Anschließen beispielsweise einer Einrichtung zur Aufnahme oder zum Einleiten eines gefilterten Fluids, wie einem Behälter, einem Leitungssystem usw..

Des Weiteren kann, wie zuvor mit Bezug auf die Fig. 5 und 6 beschrieben wurde, das Abstandsgewirk (3) bzw. der Filterkörper (2) als Band (36) vorgesehen werden, das beispielweise von einer ersten Rolle abgewickelt und durch die Filtereinheit (1) hindurchgeführt wird und am anderen Ende auf eine zweite Rolle wieder aufgewickelt wird. Ebenso kann das Abstandsgewirk (3) bzw. der Filterkörper (2) auch als Endlosband (37) vorgesehen werden, dass mittels einer geeigneten Vorrichtung in der Aufnahme (27) bewegt wird, so dass immer ein frischer Abschnitt des Bandes mit einem zu filternden Fluid (12) durchströmt werden kann, wie zuvor ebenfalls mit Bezug auf die Fig. 5 und 6 beschrieben wurde.

Des Weiteren kann vor und/oder nach dem Abschnitt der Aufnahme (27), wo der Filterkörper (2) mit dem zu filternden Fluid (12) beaufschlagt wird, wie zuvor in Fig. 5 gezeigt und beschrieben, eine Filter-Reinigungseinheit (1) vorgesehen werden zum Reinigen des Filterkörpers (2).

Das Bewegen des Filterkörpers (2) durch die Aufnahme (27) der Filtereinheit (1) kann manuell und/oder maschinell erfolgen. Beispielsweise können die erste und zweite Rolle oder die Vorrichtung zum Bewegen des Endlosbandes geeignet gesteuert werden mittels einer Steuerung, welche die Rollen bzw. die Vorrichtung ansteuert, so dass der Filterkörper (2) geeignet in der und durch die Filtereinheit (1) bewegt wird zum Reinigen eines zu filternden Fluids (12). Die Rollen sind dabei vorzugsweise über entsprechende Motoren drehbar. Gleiches gilt für die Vorrichtung zum Bewegen des Abstandsgewirks (3) als Endlosband (37) in der Filtereinheit (1).

Gleiches gilt für das Schieberelement (41). Das Schieberelement (41) kann manuell und/oder maschinell in der Filtereinheit (1) bewegt werden zum Komprimieren und Dekomprimieren des Filterkörpers (2) in der Filtereinheit (1).

Wie zuvor mit Bezug auf Fig. 7 beschrieben, kann der Querschnitt der Aufnahme (27) der Filtereinheit (1) dabei konstant ausgebildet sein oder die Aufnahme (27) mit einem Einlasstrichterabschnitt und/oder Auslasstrichterabschnitt ausgebildet sein.

Des Weiteren kann die Filtereinheit (1) mit der Aufnahme (27) für den Filterkörper (2) als geschlossenes Gehäuse ausgebildet sein, in welcher der Filterkörper (2) einlegbar ist, wobei das Gehäuse lediglich den Fluideinlass (30) und den Fluidauslass (31) aufweist. Optional kann die Filtereinheit (1) eine zusätzliche Einlassöffnung (28) und/oder Auslassöffnung (29) für den Filterkörper (2) aufweisen, so dass der Filterkörper (2) beim Vorsehen der Einlass- und der Auslassöffnung (28, 29) durch die Filtereinheit (1) einführbar und hindurchführbar ist, wie in den Fig. 5, 6 und 7 gezeigt ist.

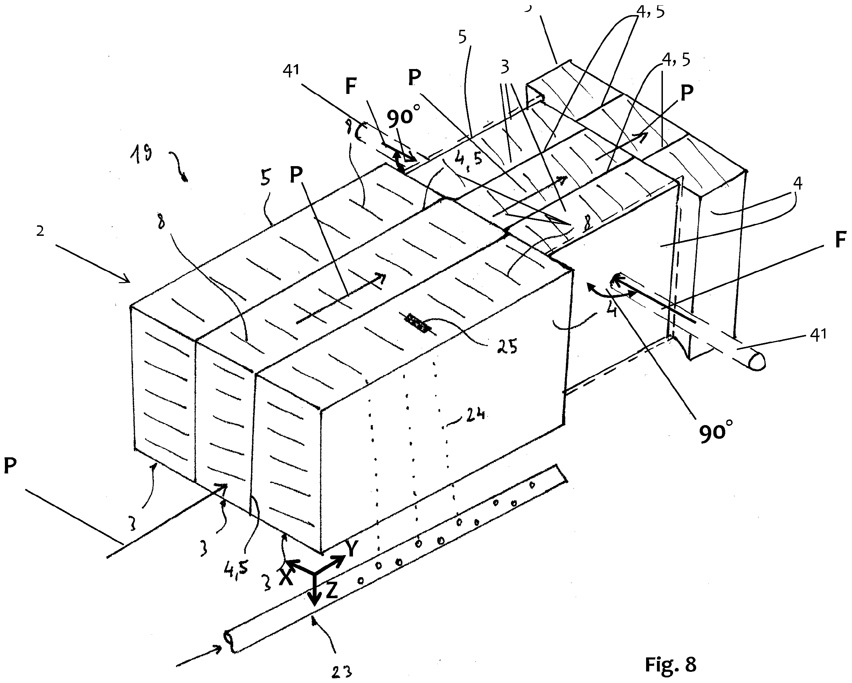

In Fig. 8 ist eine Prinzipskizze eines Filterkörpers (2) in Form mehrerer Abstandsgewirke (3) gemäß noch einer weiteren Ausführungsform gezeigt.

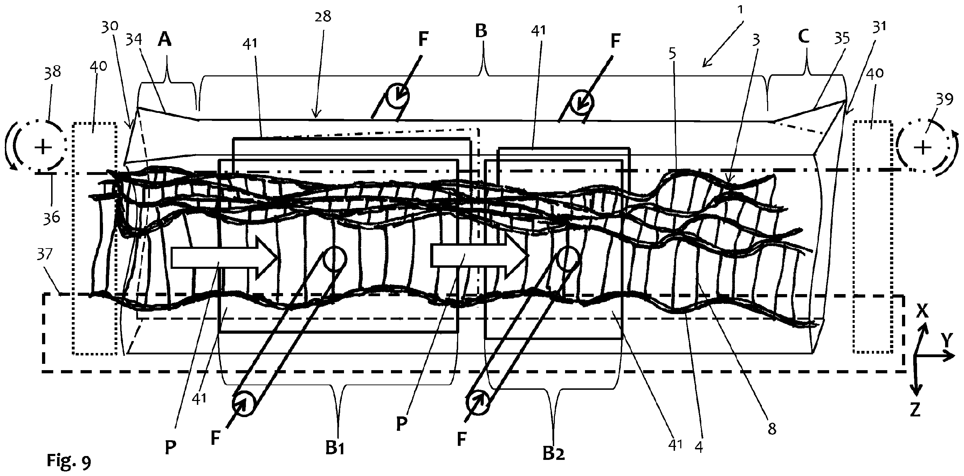

Das jeweilige Abstandsgewirk (3), wie es in Fig. 8 und nachfolgenden Fig. 9, 10 und 11 eingesetzt wird, umfasst hierbei eine erste und eine zweite Deckschicht (4; 5) mit einer Vielzahl von Öffnungen (6), die von Randbereichen (7) begrenzt werden, wobei sich Fäden (8) von den Randbereichen (7) der ersten Deckschicht (4) zu Randbereichen (7) der zweiten Deckschicht (5) erstrecken. Der Aufbau des Abstandsgewirks (3) wurde bereits mit Bezug auf die Fig. 1 bis 7 ausführlich beschrieben, so dass auf unnötige Wiederholungen verzichtet wird und stattdessen auf die Beschreibung zu den Fig. 1-7 Bezug genommen wird.

Die Ausführungsform gemäß Fig. 8 basiert auf der in Fig. 4 gezeigten Ausführungsform. Dabei sind mehrere Abstandsgewirke (3) in der Filtereinheit (19) kassettenartig nebeneinander angeordnet, wodurch eine weitere Verbesserung der Filterwirkung erzielt wird. Außerdem fließt ein zu filterndes Fluid, z.B. zu filterndes Wasser, wie in Fig. 4 und 8 gezeigt ist, zwischen den Deckschichten (4, 5) oder quer bzw. in Längsrichtung des Abstandsgewirks (3) durch das Abstandsgewirk (3) hindurch. Die Fließrichtung des zu filternden Fluids durch die Abstandsgewirke (3) ist in Fig. 8 mit Pfeilen P angedeutet.

Die Ausführungsform gemäß Fig. 8 unterscheidet sich von der Ausführungsform gemäß Fig. 4 dadurch, dass die Abstandsgewirke (3) zusätzlich komprimiert werden. Wie in Fig. 8 stark vereinfacht angedeutet ist, werden die Abstandsgewirke (3) in ihrer Querrichtung (X-Richtung) zu ihren Deckschichten (4, 5) in Fig. 8 komprimiert. Das Komprimieren der Abstandsgewirke (3) in ihrer Querrichtung zu ihren Deckschichten (4, 5) ist in Fig. 8 mit Pfeilen F angedeutet.

Eine Komprimierung des Abstandsgewirks (3) findet auch in dem Ausführungsbeispiel statt, wie es in Fig. 5 gezeigt ist. In dem Ausführungsbeispiel in Fig. 5 wird im Gegensatz zu dem Ausführungsbeispiel in Fig. 8 das Abstandsgewirk (3) jedoch in einer anderen Richtung durchströmt. In Fig. 5 wird das Abstandsgewirk (3) senkrecht zu seinen Deckschichten (4, 5) durchströmt bzw. in Z-Richtung. In dem Ausführungsbeispiel in Fig. 8 werden die Abstandsgewirke (3) dagegen quer oder in ihrer Längsrichtung (Y-Richtung), wie mit Pfeilen P in Fig. 8 angedeutet ist, durchströmt. Das zu filternde Fluid (12) strömt somit zwischen den Deckschichten (4, 5) des jeweiligen Abstandsgewirks (3) in Fig. 8 entlang.

Durch das Komprimieren des Abstandsgewirks (3) in seiner Querrichtung bzw. senkrecht zu seinen Deckschichten (4, 5) in Fig. 8, kann der Querschnitt des Abstandsgewirks (3) bei Bedarf verkleinert werden. Je stärker das Abstandsgewirk (3) komprimiert wird, umso langsamer fließt ein zu filterndes Fluid (12), wie z.B. zu filterndes Wasser, durch die Abstandsgewirke (3) und umso stärker kann das zu filternde Fluid (12) einer Filterung unterzogen werden.

Mittels des Komprimierens des Abstandsgewirks (3) in Querrichtung des Abstandsgewirks (3), kann somit die Filterwirkung an ein zu filterndes Fluid angepasst werden und je nach Grad der Komprimierung des Abstandsgewirks (3) eine stärkere oder schwächere Filterung des zu filternden Fluids (12) erzielt werden. Beispielsweise kann die Komprimierung des Abstandsgewirks (3) abhängig von wenigstens einem Parameter eingestellt werden. Ein solcher Parameter ist beispielsweise der Grad der Verunreinigung des zu filternden Fluids, die Art der zu filternden Stoffe oder Bestandteile aus dem zu filternden Fluid, die Anzahl der Filterdurchläufe die das zu filternde Fluid (12) bei der Filterung durch das Abstandsgewirk (3) durchläuft usw..

Die Komprimierung des Abstandsgewirks (3) oder der Abstandsgewirke (3) kann dabei außerdem so eingestellt werden, dass der Durchfluss des zu filternden Fluids (12) konstant oder nahezu konstant bleibt.

In einer Ausführungsform, können statt nur einem Abschnitt der Abstandsgewirke (3) zu komprimieren, wie in dem Ausführungsbeispiel in Fig. 8 gezeigt ist, mehrere aufeinander folgende Abschnitte der Abstandsgewirke (3) komprimiert werden oder das Abstandsgewirk (3) über seine gesamte Länge komprimiert werden. Ein Ausführungsbeispiel, bei welchem mehrere aufeinander Abschnitte des Abstandsgewirks (3) komprimiert werden ist in nachfolgender Fig. 9 gezeigt. Die zu komprimierenden Abschnitte der Abstandsgewirke (3) können dabei alle gleich stark komprimiert werden und dem entsprechend alle einen gleich großen komprimierten Querschnitt aufweisen. Ebenso können die zu komprimierenden Abschnitte der Abstandsgewirke (3) auch unterschiedlich stark komprimiert werden, und ihr komprimierter Querschnitte dem entsprechend unterschiedlich groß sein.

Optional kann des Weiteren zusätzlich, wie in Fig. 8 gezeigt ist, wenigstens eine Einrichtung (23) zum Erzeugen von Gasblasen (24) vorgesehen werden. Die Einrichtung zum Erzeugen von Gasblasen (23) kann z.B. unterhalb des Abstandsgewirks (3) angeordnet werden, sodass die Gasblasen (24) mit den Fäden (8) des Abstandsgewirks (3) in Wechselwirkung treten, um dadurch Ablagerungen (25) von den Fäden (8) zu lösen. Hierdurch wird eine Verunreinigung des Abstandsgewirks (3) weitergehend vermieden bzw. verhindert. Eine solche Einrichtung (24) zum Erzeugen von Gasblasen (23) kann beispielsweise vor dem zu komprimierenden Bereich der Abstandsgewirke (3), wie in dem Ausführungsbeispiel in Fig. 8 gezeigt ist, in dem zu komprimierenden Bereich der Abstandsgewirke (3) und/oder im Anschluss an den zu komprimierenden Bereich der Abstandsgewirke (3) unterhalb und/oder oberhalb der Abstandsgewirke (3) angeordnet sein.

In Fig. 9 ist eine Prinzipskizze einer Filtereinheit (1) mit wenigstens einem Abstandsgewirk (3) als Filterkörper (2) gemäß einer weiteren Ausführungsform gezeigt.

Der Filterkörper (2) der Filtereinheit (1) besteht wie zuvor mit Bezug auf die Fig. 1-8 beschrieben wurde, aus wenigstens einem Abstandsgewirk (3). Das Abstandsgewirk (3) weist eine erste und eine zweite Deckschicht (4, 5) mit einer Vielzahl von Öffnung (6) auf. Hierbei ist der Filterkörper (2) bzw. das Abstandsgewirk (3) in Querrichtung oder senkrecht zu der ersten und zweiten Deckschicht (4, 5) komprimierbar, wie in Fig. 9 und zuvor in Fig. 8 gezeigt ist.

Die Filtereinheit (1) weist eine Aufnahme (27) auf, zum Aufnehmen und Komprimieren des komprimierbaren Filterkörpers (2) und Filtern eines zu filternden Fluids (12), beispielsweise Wasser, mittels des komprimierten Filterkörpers (2). Die Aufnahme (27) ist dabei derart ausgebildet, dass der in der Aufnahme (27) aufgenommene komprimierbare Filterkörper (2) bzw. das wenigstens eine Abstandsgewirk (3) in seiner Querrichtung (X-Richtung) oder senkrecht zu seiner Deckschicht (4, 5) zumindest abschnittsweise komprimiert wird, wie mit Pfeilen F in Fig. 9 angedeutet ist.

In dem Ausführungsbeispiel, wie es in Fig. 9 gezeigt ist, werden beispielsweise zwei in Längsrichtung oder Y-Richtung des Abstandsgewirks (3) aufeinander folgende Abschnitte B1 und B2 gleich stark oder, wie in Fig. 9 angedeutet ist, unterschiedlich stark komprimiert.

Dazu wird das Abstandsgewirk (3) in dem Ausführungsbeispiel in Fig. 9 in dem jeweiligen Abschnitt B1 bzw. B2 beispielsweise mittels zweier Schieberelemente (41) zusammengedrückt. Dabei ist wenigstens ein Schieberelement (41) beweglich ausgebildet und kann in Richtung des anderen Schieberelements (41) bewegt werden und dabei das dazwischen angeordnete wenigstens eine Abstandsgewirk (3) komprimieren. Ebenso kann auch nur ein bewegliches Schieberelement (41) vorgesehen werden, welches in X-Richtung in Richtung der Wandung der Aufnahme (27) beweglich ist, um das Abstandsgewirk (3) zwischen dem Schieberelement(41) und der Wandung in Querrichtung (X-Richtung) oder senkrecht zu der Deckschichte (4, 5) des Abstandsgewirks(3) zu komprimieren.

Wie in Fig. 9 gezeigt sind beide Schieberelemente (41) in Längsrichtung des Abstandsgewirks (3) bzw. Y-Richtung zueinander parallel angeordnet und in Querrichtung des Abstandsgewirks bzw. X-Richtung relativ zueinander verschieblich. Je nachdem wie weit die Schieber-elemente 41 relativ zueinander zusammengeschoben werden, wird das Abstandsgewirk (3) dazwischen komprimiert.

In einer Ausführungsform der Erfindung ist wenigstens eines der Schieberelemente 41 derart ausgebildet und in der Aufnahme (27) angeordnet, dass es statt parallel oder in X-Richtung zu dem anderen Schieberelemente (41) bewegt zu werden, zu dem anderen Schieberelement (41) schräg gestellt werden kann, wie mit einer strichpunktierten Linie in Fig. 9 angedeutet ist. Dadurch kann ein Trichterabschnitt ausgebildet werden, der sich in Längsrichtung des Abstandsgewirks (3) bzw. Y-Richtung erweitert, wie in Fig. 9 mit einer strichpunktierten Linie gezeigt ist, oder sich in Längsrichtung des Abstandsgewirks (3) bzw. Y-Richtung verjüngt (nicht dargestellt).

Das Abstandsgewirk (3) wird, wie in Fig. 9 mit Pfeilen P angedeutet ist, quer (Y-Richtung) oder in Längsrichtung des Abstandsgewirks (3) durchströmt. Das zu filternde Fluid (12) strömt an einer Seite in das Abstandsgewirk (3) zwischen den Deckschichten (4, 5) und durchströmt das Abstandsgewirk (3) in Längsrichtung oder Y-Richtung. Dabei wird es gefiltert und tritt als gefiltertes Fluid (13) auf der anderen Seite des Abstandsgewirks (3) aus und kann aus der Filtereinheit (1) entnommen oder abgeleitet werden.

Wie in Fig. 9 angedeutet ist, ist die Aufnahme (27) derart ausgebildet wenigstens ein Abstandsgewirk (3) aufzunehmen und quer oder in Längsrichtung bzw. Y-Richtung durchströmen zu lassen. In dem Ausführungsbeispiel wie es stark vereinfacht in Fig. 9 gezeigt ist, kann die Aufnahme (27) zusätzlich derart ausgebildet sein, dass das Abstandsgewirk (3) durch die Aufnahme (27) hindurch bewegbar ist. Dazu kann das Abstandsgewirk (3) beispielsweise als Endlosband, wie mit einer gestrichelten Linie angedeutet ist, durch die Aufnahme (27) hindurchbewegt und in der Aufnahme (27) quer oder in Längsrichtung bzw. Y-Richtung mit einem zu filternden Fluid (12) durchströmt werden.

Alternativ kann das Abstandsgewirk (3) auch als Band (36) mit zwei Enden ausgebildet sein und z.B. von einer ersten Rolle (38) abwickelbar, durch die Aufnahme (27) hindurchführbar und am anderen Ende der Aufnahme (27) auf eine zweite Rolle (39) aufwickelbar vorgesehen werden, wie mit einer strich-punktierten Linie in Fig. 9 angedeutet ist. Das Abstandsgewirk (3) wird dabei ebenfalls in der Aufnahme (27) quer oder in Längsrichtung bzw. Y-Richtung mit einem zu filternden Fluid (12) durchströmt, wie mit den Pfeilen P angedeutet ist. Dabei strömt das zu filternde Fluid (12) zwischen den Deckschichten (4, 5) in Längsrichtung durch das Abstandsgewirk (3) hindurch und wird dabei gefiltert.

Wurde ein Abschnitt des Bandes (36) oder Endlosbandes (37) mit dem zu filternden Fluid (12) durchströmt, so kann das Band (36) mittels der Rollen (38), (39) oder das Endlosband (37) mittels einer geeigneten Vorrichtung weiterbewegt werden, so dass als nächstes in der Aufnahme (27) ein neuer Abschnitt des Filterkörpers (2) zum Filtern angeordnet und ein zu filterndes Fluid (12) in Längsrichtung des Abstandsgewirks (3) oder quer durch das Abstandsgewirk (2) in der Aufnahme (27)geleitet werden kann.

Dabei kann die Aufnahme (27) derart ausgebildet sein, zum Einführen und Hindurchführen des Filterkörpers (2) durch die Aufnahme (27). Des Weiteren weist die Aufnahme (27) beispielsweise eine Fluideinlass (30) und einen Fluidauslass (31) auf. Das zu filternde Fluid strömt in der stark vereinfachten Darstellung in Fig. 9 dabei durch den Fluideinlass (30) in die Aufnahme (27) und anschließend durch den Fluidauslass (31) der Aufnahme (27) als gefiltertes Fluid (13) heraus.

Der Fluideinlass (30) kann optional mit einem Anschluss versehen oder verbindbar ausgebildet sein, zum Anschließen beispielsweise einer Einrichtung mit einem zu filternden Fluid, wie einem Behälter mit einem zu filterndem Fluid, einem Leitungssystem mit einem zu filternden Fluid usw.. Entsprechend kann der Fluidauslass (31) optional beispielsweise mit einem Anschluss versehen oder verbindbar ausgebildet sein zum Anschließen beispielsweise einer Einrichtung zur Aufnahme oder zum Einleiten eines gefilterten Fluids, wie einem Behälter, einem Leitungssystem usw..

Optional kann ein Einlassbereich A der Aufnahme (27) beispielsweise zusätzlich mit einem Einlasstrichterabschnitt (34) oder einem sich in seinem Querschnitt verjüngenden Abschnittversehen sein. Der Einlasstrichterabschnitt (34) oder der sich in seinem Querschnitt verjüngenden Abschnitt ist derart ausgebildet, wie in Fig. 9 angedeutet ist, dass das Abstandsgewirk (3) in seiner Querrichtung oder senkrecht zu seiner Deckschicht (4, 5) bzw. in X-Richtung in Fig. 9 komprimiert wird.

Die Aufnahme (27) kann optional in einem Bereich oder Zwischenbereich B, der zwischen dem Einlassbereich A und einem Auslassbereich C der Aufnahme (27) vorgesehen ist, derart ausgebildet sein, dass sie das Abstandsgewirk (3) in z.B. zwei weiteren aufeinander folgenden Abschnitten B1 und B2 komprimiert. Dazu sind, wie zuvor beschrieben, beispielsweise zwei Paare von Schieberelementen (41) vorgesehen, welche das Abstandsgewirk (3) in Querrichtung bzw. X-Richtung in den Abschnitten B1 und B2 komprimieren.

Ebenso kann der Bereich B auch so ausgebildet sein, dass keine oder keine weitere Komprimierung des Abstandsgewirks (3) erfolgt (nicht dargestellt). In diesem Fall können die Schieberelemente (41) in Fig. 9, welche zusammenschiebbar sind, um das Abstandsgewirk (3) in Querrichtung oder X-Richtung zu komprimieren, gegebenenfalls entfallen.

Ebenso können der Einlasstrichterabschnitt (34) und die Aufnahme (27) derart ausgebildet sein, dass der Einlasstrichterabschnitt (34) den Filterkörper (2) in einem ersten Schritt komprimiert oder vorkomprimiert und die Aufnahme (27) den Filterkörper (2) weiter in wenigstens einem weiteren Abschnitt oder stufenweise über mehrere aufeinanderfolgende Abschnitt B1 und B2 auf ein ausreichendes Maßkomprimiert, um ein zu filterndes Fluid (12) geeignet zu filtern.

Optional kann auch der Auslassbereich C der Aufnahme (27) zusätzlich mit einem Auslasstrichterabschnitt (35) versehen sein. Der Auslasstrichterabschnitt (35) kann sich in seinem Querschnitt beispielsweise vergrößern. Dadurch kann der Filterkörper (2) sich langsam auseinanderfalten oder dekomprimiert werden. Der Auslassbereich C der Filtereinheit (1) mit seinem Auslasstrichterabschnitt (35) ist ebenfalls in den Fig. 9 gezeigt. Statt sich in seinem Querschnitt zu vergrößern kann der Auslasstrichterabschnitt (35) sich auch in seinem Querschnitt verjüngen, wie mit einer strichpunktierten Linie angedeutet ist, um das Abstandsgewirk (3) in Querrichtung oder X-Richtung zu komprimieren.

Wahlweise zusätzlich kann die Filtereinheit (1) eine Filter-Reinigungseinheit (40) aufweisen oder mit einer Filter-Reinigungseinheit (40) gekoppelt werden, wie mit einer gepunkteten Linie in Fig. 9 angedeutet ist, zum Reinigen des Filterkörpers (2) vor und/oder nach dem Durchströmen des Filterkörpers (2) in der Aufnahme (27) mit einem zu filternden Fluid (12).

Als Filter-Reinigungseinheit (40) kann beispielsweise der Filterkörper (2) vor oder im Bereich des Einlasstrichterabschnitts (34) und/oder im Anschluss oder im Bereich des Auslasstrichterabschnitts (35) eine Spülvorrichtung aufweisen zum Durchspülen des Filterkörpers (2) mit Wasser, Wasserdampf und/oder einem anderen geeigneten flüssigen und/oder gasförmigen Reinigungsmedium.

Dies hat den Vorteil, dass beispielsweise das Endlosband (37) gereinigt und so immer mehrmals verwendet werden kann, bevor es ausgetauscht wird.

Gleiches gilt für das Band (36) mit seinen beiden Enden. Dieses kann nachdem ein Abschnitt zum Filtern verwendet und aus der Aufnahme (27) herausbewegt wurde zunächst durch eine nachgeschaltete Filter-Reinigungseinheit (40) gereinigt und anschließend wieder zurück in die Aufnahme (27) bewegt werden, zum Filtern eines zu filternden Fluids (12). Im Anschluss kann der Abschnitt zum Filtern erneut durch die nachgeschaltete Filter-Reinigungseinheit (40) gereinigt und erneut wieder zurück in die Aufnahme (27) bewegt werden zum Filtern eines weiteren zu filternden Fluids (12). Diese Schritte können sooft wiederholt werden, wie der Abschnitt des Filterkörpers (2) ausreichend gereinigt werden kann, um ein zu filterndes Fluid (12) geeignet zu filtern. Lässt sich der Abschnitt des Filterkörpers (2) nicht mehr ausreichend reinigen, so kann das Band (36) bzw. Endlosband (37) weiterbewegt werden, so dass der nächste saubere Abschnitt des Filterkörpers (2) in der Aufnahme (27) bereit oder angeordnet ist, um ein zu filterndes Fluid (12) zu filtern. Für diesen neuen sauberen Abschnitt des Filterkörpers (2) können die zuvor genannten Schritte des Reinigens des Abschnitts des Filterkörpers (2), des erneuten Filterns durch den Abschnitt des Filterkörpers (2) wiederholt werden, bis auch dieser Abschnitt des Filterkörpers (2) schließlich verbraucht oder nicht mehr ausreichend gereinigt werden kann und das Band (36) bzw. Endlosband (37) weiterbewegt werden muss, zu dem nächsten sauberen Abschnitt.

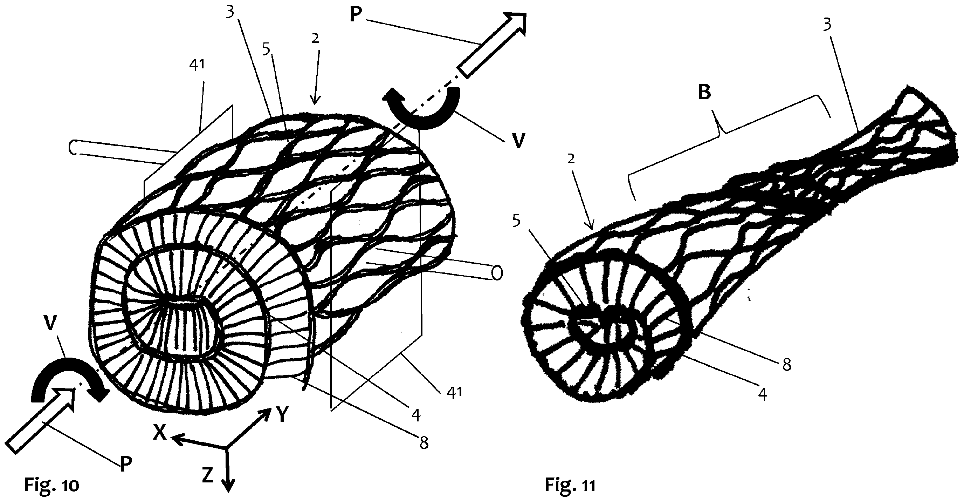

Fig. 10 ist eine Perspektivansicht eines Abstandsgewirks (3), wobei das Abstandsgewirk (3) zusätzlich gerollt ist.

Das Abstandsgewirk (3) kann ebenfalls in einer entsprechenden Filtereinheit eingesetzt werden, wie sie beispielhaft in Ausführungsbeispielen in den Fig. 1, 3, 5-9 gezeigt ist. Das gerollte Abstandsgewirk (3) wird dabei in seiner Längsrichtung bzw. Y-Richtung mit einem zu filternden Fluid (12) durchströmt, wie mit den Pfeilen P in Fig. 10 angedeutet ist. Das zu filternde Fluid strömt dabei zwischen den Deckschichten (4, 5) des Abstandsgewirks (3).

Dabei kann das Abstandsgewirk (3) zumindest in einem Abschnitt weiter in Querrichtung komprimiert werden, wie mit den beiden in X-Richtung beweglichen Schieberelementen (41) in Fig. 10 angedeutet ist. Durch Zusammenbewegen der Schieberelemente (41) in X-Richtung oder senkrecht zu der Deckschicht (4, 5) des Abstandsgewirks (3), kann das dazwischen gerollte Abstandsgewirk (3) in Querrichtung oder X-Richtung zusätzlich komprimiert werden.

Wahlweise kann das gerollte Abstandsgewirk (3) des Weiteren auch zusätzlich verdrillt werden, wie mit den Pfeilen V in Fig. 10 angedeutet ist. Dabei wird wenigstens ein Ende des Abstandsgewirks (3) gegenüber dem anderen Ende des Abstandsgewirks (3) verdreht. Eine Verdrillung ist dabei das Gegeneinander verwinden und das schraubenförmige Umeinanderwickeln des Abstandsgewirks (3).

Dadurch kann das gerollte Abstandsgewirk (3) ebenfalls zusätzlich in Abschnitten komprimiert werden, wie in Fig. 11 gezeigt ist.

In Fig. 11 ist das gerollte Abstandsgewirk (3) als Filterkörper 2 zusätzlich verdrillt. Dadurch ist ein Bereich B des Abstandsgewirks (3) weiter komprimiert, wie in Fig. 11 gezeigt ist. Zur Verdrillung des Abstandsgewirks (3) werden beide Enden des Abstandsgewirks (3) gegeneinander verdreht. Dadurch wird der Bereich B zwischen den Enden des Abstandsgewirks (3) zusätzlich durch die Verdrillung komprimiert.

Obwohl die vorliegenden Ausführungsbeispiele beschrieben wurden, ist die Erfindung darauf nicht beschränkt, sondern auf vielfältige Art und Weise modifizierbar. Insbesondere sind die zuvor beschriebenen Ausführungsformen und Ausführungsbeispiele miteinander kombinierbar, insbesondere einzelne Merkmale davon. Beispielsweise kann das in Fig. 10 und 11 gezeigte Abstandsgewirk auch in den in den Fig. 1, 3 und 4-9 gezeigten Filtereinheiten (1) eingesetzt werden. Ebenso können statt einem Abstandsgewirk auch mehrere Abstandsgewirke als Filterkörper (2) vorgesehen werden.

### Bezugszeichenliste

- 1: Filtereinheit
- 2: Filterkörper
- 3: Abstandsgewirk
- 4: Erste Deckschicht
- 5: Zweite Deckschicht
- 6: Öffnung
- 7: Randbereich
- 8: Fäden
- 12: zu filternde Flüssigkeit bzw. zu filterndes Fluid
- 13: gefilterte Flüssigkeit bzw. gefiltertes Fluid
- 15: Abdeckplatte
- 16: Öffnungen von Abdeckplatte
- 17: Deckfläche (Abstandsgewirk)
- 18: Deckfläche (Abstandsgewirk)
- 19: Filtereinheit
- 21: Papierschicht
- 22: Papierschicht
- 23: Einrichtung zum Erzeugen von Gasblasen
- 24: Gasblasen
- 25: Ablagerungen an Fäden
- 27: Aufnahme
- 28: Einlassöffnung für Filterkörper
- 29: Auslassöffnung für Filterkörper
- 30: Flüssigkeitseinlass
- 31: Flüssigkeitsauslass
- 34: Einlasstrichterabschnitt
- 35: Auslassrichterabschnitt
- 36: Band
- 37: Endlosband
- 38: erste Rolle
- 39: zweite Rolle
- 40: Filter-Reinigungseinheit
- 41: Schieberelement

## Patentansprüche

1. Filtereinheit (1, 19), aufweisend:
wenigstens ein Abstandsgewirk (3), welches eine erste und eine zweite Deckschicht (4; 5) mit jeweils einer Vielzahl von Öffnungen (6) umfasst, die von Randbereichen (7) begrenzt werden, wobei sich Fäden (8) von den Randbereichen (7) der ersten Deckschicht (4) zu Randbereichen (7) der zweiten Deckschicht (5) erstrecken und wobei das wenigstens eine Abstandsgewirk (3) gerollt und zumindest in einem Abschnitt in Querrichtung zu seinen Deckschichten (4, 5) komprimiert ist, wobei die Filtereinheit (1) das wenigstens eine Abstandsgewirk (3) als Filterkörper (2) aufweist, wobei die Filtereinheit (1) eine Aufnahme (27) zum Aufnehmen des Abstandsgewirks (3) als Filterkörper (2) aufweist,
wobei die Aufnahme (27) an einem Ende einen Fluideinlass (30) aufweist zum Leiten von zu filterndem Fluid (12) zu dem wenigstens einen Abstandsgewirk (3) und zum Durchströmen des wenigstens einen Abstandsgewirks (3) in Längsrichtung entlang seiner Deckschichten (4, 5) und den sich dazwischen erstreckenden Fäden (8) und wobei die Aufnahme (27) an einem gegenüberliegenden Ende einen Fluidauslass (31) aufweist zum anschließenden Abführen des durch das wenigstens eine Abstandsgewirk (3) gefilterten Fluids (13),
wobei die Aufnahme (27) derart ausgebildet ist, dass das in der Aufnahme (27) aufgenommene wenigstens eine gerollte Abstandsgewirk (3) in wenigstens einem Abschnitt in der Querrichtung zu seinen Deckschichten (4, 5) komprimiert ist.

2. Filtereinheit nach dem vorhergehenden Anspruch,
**dadurch gekennzeichnet,**
**dass** die Aufnahme (27) mit einem Einlasstrichterabschnitt (34) versehen ist, welcher sich derart verjüngt, dass das wenigstens eine Abstandsgewirk (3) quer zu seinen Deckschichten (4, 5) komprimiert wird.

3. Filtereinheit nach einem der vorhergehenden Ansprüche,
**dadurch gekennzeichnet,**
**dass** die Aufnahme (27) mit einem Auslasstrichterabschnitt (35) versehen ist, welcher sich derart vergrößert, dass das wenigstens eine Abstandsgewirk (3) sich auseinanderfaltet.

4. Filtereinheit nach einem der vorhergehenden Ansprüche,
**dadurch gekennzeichnet,**
**dass** die Aufnahme (27) wenigstens ein bewegliches Schieberelement (41) aufweist, welches zwischen einer Position, in welcher es das wenigstens eine Abstandsgewirk (3) quer zu den Deckschichten (4, 5) komprimiert und einer Position beweglich ist, in welcher das Abstandsgewirk (3) sich wieder auseinanderfaltet oder dekomprimiert wird.

5. Filtereinheit nach einem der einem der vorhergehenden Ansprüche,
**dadurch gekennzeichnet,**
**dass** der Filterkörper (2) als Band (36) mit zwei Enden oder als Endlosband (37) ausgebildet ist, wobei die Aufnahme (27) derart ausgebildet ist, dass das Band (36, 37) in die Aufnahme (36, 37) an einem Ende einführbar, durch die Aufnahme (27) hindurchführbar und an dem anderen Ende aus der Aufnahme (27) wieder herausführbar ist, und
wobei das Band (36) zum Einführen in die Aufnahme (27) von einer Rolle (38) abwickelbar und in die Aufnahme (27) einführbar und/oder wobei das Band (36) nach dem Herausführen aus der Aufnahme (27) auf eine Rolle (39) aufwickelbar ist.

6. Filtereinheit nach einem der vorhergehenden Ansprüche,
**dadurch gekennzeichnet,**
**dass** die Filtereinheit (1) eine Filter-Reinigungseinheit (40) aufweist oder mit einer Filter-Reinigungseinheit (40) koppelbar ist zum Reinigen des Abstandsgewirks (3) vor und/oder nach dem Durchströmen des Abstandsgewirks (3) in der Aufnahme (27) mit einem zu filternden Fluid (12).

7. Filtereinheit nach Anspruch 6,
**dadurch gekennzeichnet,**
**dass** die Filter-Reinigungseinheit (40) vor und/oder nach der Aufnahme (27) mit der Filtereinheit (1) gekoppelt oder verbunden ist zum Reinigen des Abstandsgewirks (3) vor und/oder nach dem Durchströmen des Abstandsgewirks (3) in der Aufnahme (27) mit einem zu filternden Fluid (12).

8. Filtereinheit nach einem der vorhergehenden Ansprüche,
**dadurch gekennzeichnet,**
**dass** in der Filtereinheit (19) mehrere Abstandsgewirke (3) vorgesehen sind, wobei die Abstandsgewirke (3) insbesondere kassettenartig nebeneinander angeordnet sind und vorzugsweise zusätzlich gerollt und/oder verdrillt sind.

9. Filtereinheit nach einem der vorstehenden Ansprüche,
**dadurch gekennzeichnet,**
**dass** der Filterkörper (2) aus Metall, einer Metalllegierung und/oder Kunststoff, insbesondere Polyurethan (PU), besteht, wobei der Kunststoff vorzugsweise mit einem Metall oder einer Metalllegierung beschichtet ist.

10. Filtereinheit nach wenigstens einem der vorhergehenden Ansprüche,
**dadurch gekennzeichnet,**
**dass** wenigstens eine der Deckschichten (4, 5) und/oder die Fäden (8) des Abstandsgewirks (3) mit desinfizierend wirkenden Mitteln, antimikrobiell wirkenden Mitteln und/oder einem Biofilm versehen sind.

11. Filtereinheit nach wenigstens einem der vorhergehenden Ansprüche,
**dadurch gekennzeichnet,**
**dass** das Abstandsgewirk (3) verdrillt ist.

12. Verwendung einer Filtereinheit (1, 19) nach einem der vorgehenden Ansprüche, zur Nitrifikation einer Flüssigkeit.

## Claims

1. Filter unit (1, 19), including:
at least one knitted spacer fabric (3), comprising a first and a second cover layer (4; 5) each having a plurality of openings (6) delimited by edge regions (7), threads (8) extending from the edge regions (7) of the first cover layer (4) to edge regions (7) of the second cover layer (5), and the at least one knitted spacer fabric (3) being rolled and being compressed at least in a portion in a direction transverse to the cover layers (4, 5) thereof, the filter unit (1) including the at least one knitted spacer fabric (3) as a filter body (2), the filter unit (1) including a recess (27) for receiving the knitted spacer fabric (3) as a filter body (2),
wherein the recess (27) includes a fluid inlet (30) at one end for guiding fluid (12) to be filtered to the at least one knitted spacer fabric (3) and for flowing through the at least one knitted spacer fabric (3) in a longitudinal direction along the cover layers (4, 5) thereof and the threads (8) extending between them, and wherein the recess (27) includes a fluid outlet (31) at an opposite end for subsequently discharging the fluid (13) filtered through the at least one knitted spacer fabric (3),
wherein the recess (27) is configured in such a way that the at least one rolled knitted spacer fabric (3) received in the recess (27) is compressed in at least one portion in the direction transverse to the cover layers (4, 5) thereof.

2. Filter unit according to the preceding claim,
**characterised**
**in that** the recess (27) is provided with an inlet funnel portion (34), which narrows in such a way that the at least one knitted spacer fabric (3) is compressed transverse to the cover layers (4, 5) thereof.

3. Filter unit according to either of the preceding claims,
**characterised**
**in that** the recess (27) is provided with an outlet funnel portion (35) which widens in such a way that the at least one knitted spacer fabric (3) spreads apart.

4. Filter unit according to any of the preceding claims,
**characterised**
**in that** the recess (27) includes at least one movable slider element (41) which is movable between a position in which it compresses the at least one knitted spacer fabric (3) transverse to the cover layers (4, 5) and a position in which the knitted spacer fabric (3) spreads apart or is decompressed again.

5. Filter unit according to any of the preceding claims,
**characterised**
**in that** the filter body (2) is formed as a strip (36) having two ends or as an endless strip (37), the recess (27) being formed in such a way that the strip (36, 37) can be passed into the recess (36, 37) at one end, can be passed through the recess (27), and can be passed out of the recess (27) again at the other end, and
**in that** the strip (36) can be unwound from a roll (38) for passing into the recess (27) and can be passed into the recess (27) and/or in that the strip (36) can be wound onto a roll (39) after being passed out of the recess (27).

6. Filter unit according to any of the preceding claims,
**characterised**
**in that** the filter unit (1) includes a filter cleaning unit (40) or can be coupled to a filter cleaning unit (40) to clean the knitted spacer fabric (3) before and/or after the knitted spacer fabric (3) in the recess (27) is flowed through by a fluid (12) to be filtered.

7. Filter unit according to claim 6,
**characterised**
**in that** the filter cleaning unit (40) is coupled or connected to the filter unit (1) upstream and/or downstream from the recess (27) so as to clean the knitted spacer fabric (3) before and/or after the knitted spacer fabric (3) in the recess (27) is flowed through by a fluid (12) to be filtered.

8. Filter unit according to any of the preceding claims,
**characterised**
**in that** a plurality of knitted spacer fabrics (3) are provided in the filter unit (19), the knitted spacer fabrics (3) in particular being arranged side by side in the manner of a cartridge and preferably additionally being rolled and/or twisted.

9. Filter unit according to any of the preceding claims,
**characterised**
**in that** the filter body (2) consists of metal, a metal alloy and/or plastics material, in particular polyurethane (PU), the plastics material preferably being coated with a metal or a metal alloy.

10. Filter unit according to at least one of the preceding claims,
**characterised**
**in that** at least one of the cover layers (4, 5) and/or the threads (8) of the knitted spacer fabric (3) is provided with disinfectant media, antimicrobial media and/or a biofilm.

11. Filter unit according to any of the preceding claims,
**characterised**
**in that** the knitted spacer fabric (3) is twisted.

12. Use of a filter unit (1, 19) according to any of the preceding claims, for nitrifying a liquid.

## Revendications

1. Unité de filtre (1, 19), comportant :
au moins un tissu à mailles d'espacement (3) comprenant une première et une seconde couche de recouvrement (4 ; 5) ayant respectivement une pluralité d'ouvertures (6) délimitées par des zones de rebord (7), dans laquelle des fils (8) s'étendent à partir des zones de rebord (7) de la première couche de recouvrement (4) jusqu'aux zones de rebord (7) de la seconde couche de recouvrement (5) et dans laquelle le au moins un tissu à mailles d'espacement (3) est roulé et comprimé dans au moins une section dans une direction transversale par rapport à ses couches de recouvrement (4, 5), dans laquelle l'unité de filtre (1) comporte le au moins un tissu à mailles d'espacement (3) en tant que corps de filtre (2), dans laquelle l'unité de filtre (1) comporte un logement (27) pour loger le tissu à mailles d'espacement (3) en tant que corps de filtre (2),
dans laquelle le logement (27) comporte, à une extrémité, une entrée de fluide (30) pour acheminer du fluide (12) à filtrer jusqu'au au moins un tissu à mailles d'espacement (3) et pour le faire passer à travers le au moins un tissu à mailles d'espacement (3) dans une direction longitudinale le long de ses couches de recouvrement (4, 5) et les fils (8) s'étendant entre celles-ci, et dans laquelle le logement (27) comporte, à une extrémité opposée, une sortie de fluide (31) pour 'évacuer ensuite le fluide (13) filtré à travers le au moins un tissu à mailles d'espacement (3),
dans laquelle le logement (27) est réalisé de telle sorte que le au moins un tissu à mailles d'espacement (3) roulé logé dans le logement (27) est comprimé dans au moins une section dans la direction transversale par rapport à ses couches de recouvrement (4, 5).

2. Unité de filtre selon la revendication précédente,
**caractérisée en ce que**
le logement (27) est pourvu d'une section d'entrée en entonnoir (34) qui se rétrécit de telle sorte que le au moins un tissu à mailles d'espacement (3) est comprimé transversalement à ses couches de recouvrement (4, 5).

3. Unité de filtre selon l'une des revendications précédentes,
**caractérisée en ce que**
le logement (27) est pourvu d'une section de sortie en entonnoir (35) qui s'agrandit de telle sorte que le au moins un tissu à mailles d'espacement (3) se déplie.

4. Unité de filtre selon l'une des revendications précédentes,
**caractérisée en ce que**
le logement (27) comporte au moins un élément coulissant mobile (41) qui est mobile entre une position dans laquelle il comprime le au moins un tissu à mailles d'espacement (3) transversalement aux couches de recouvrement (4, 5) et une position dans laquelle le tissu à mailles d'espacement (3) se redéplie ou est décomprimé.

5. Unité de filtre selon l'une des revendications précédentes,
**caractérisée en ce que**
le corps de filtre (2) est réalisé sous la forme d'une bande (36) ayant deux extrémités ou sous la forme d'une bande sans fin (37), dans laquelle le logement (27) est réalisé de telle sorte que la bande (36, 37) peut être insérée dans le logement (36, 37) à une extrémité, peut être passée à travers le logement (27) et être de nouveau extraite du logement (27) à l'autre extrémité, et
dans laquelle la bande (36) peut être déroulée à partir d'un rouleau (38) pour être insérée dans le logement (27) et peut être insérée dans le logement (27) et/ou dans laquelle la bande (36) peut être enroulée sur un rouleau (39) après avoir été extraite du logement (27).

6. Unité de filtre selon l'une des revendications précédentes,
**caractérisée en ce que**
l'unité de filtre (1) comporte une unité de nettoyage de filtre (40) ou peut être couplée à une unité de nettoyage de filtre (40) pour nettoyer le tissu à mailles d'espacement (3) avant et/ou après l'écoulement d'un fluide à filtrer (12) à travers le tissu à mailles d'espacement (3) dans le logement (27).

7. Unité de filtre selon la revendication 6,
**caractérisée en ce que**
l'unité de nettoyage de filtre (40) est couplée ou assemblée à l'unité de filtre (1) avant et/ou après le logement (27) pour nettoyer le tissu à mailles d'espacement (3) avant et/ou après l'écoulement d'un fluide à filtrer (12) à travers le tissu à mailles d'espacement (3) dans le logement (27) .

8. Unité de filtre selon l'une des revendications précédentes,
**caractérisée en ce que**
plusieurs tissus à mailles d'espacement (3) sont prévus dans l'unité de filtre (19), dans laquelle les tissus à mailles d'espacement (3) sont disposés les uns à côté des autres en particulier à la manière d'une cassette, et sont de plus de préférence roulés et/ou torsadés.

9. Unité de filtre selon l'une des revendications précédentes,
**caractérisée en ce que**
le corps de filtre (2) est constitué d'un métal, d'un alliage métallique et/ou d'une matière plastique, en particulier de polyuréthane (PU), dans laquelle la matière plastique est de préférence revêtue d'un métal ou d'un alliage métallique.

10. Unité de filtre selon au moins l'une des revendications précédentes,
**caractérisée en ce que**
au moins une des couches de recouvrement (4, 5) et/ou les fils (8) du tissu à mailles d'espacement (3) sont pourvus d'agents désinfectants, d'agents antimicrobiens et/ou d'un biofilm.

11. Unité de filtre selon au moins l'une des revendications précédentes,
**caractérisée en ce que**
le tissu à mailles d'espacement (3) est torsadé.

12. Utilisation d'une unité de filtre (1, 19) selon l'une des revendications précédentes, pour la nitrification d'un liquide.
